# EUROPEAN PATENT APPLICATION

(11) **EP 4 683 028 A1**
(43) Date of publication of application: **21.01.2026**
(21) Application number: 23928811.1
(22) Date of filing: 26.12.2023
(51) Int. Cl.: H01M 10/0585, H01M 10/052, H01M 10/0562, H01M 50/55, H01M 50/105, H01M 50/119, H01M 50/178, H01M 50/531, H01M 50/586, H01M 50/593

(54) **ALL-SOLID-STATE BATTERY**

(30) Priority: 17.03.2023 JP 2023042821
(71) Applicant: Kanadevia Corporation, Osaka-shi, Osaka 559-8559 (JP)
(72) Inventor: FUKUI, Hideyuki, Osaka-shi, Osaka 559-8559 (JP)
(74) Representative: Grünecker Patent- und Rechtsanwälte PartG mbB
(86) International application number: PCT/JP2023/046613
(87) International publication number: WO 2024/195245

(57) **Abstract**

An all-solid-state battery (10) disclosed herein includes a laminate (100) that includes at least one power generating element (110), an insulating film (120) that is disposed to surround the laminate (100), and an exterior body (130) inside which the laminate (110) and the insulating film (120) are housed. The exterior body (130) is formed using a metal laminated film. The inside of the exterior body (130) is depressurized.

## Description

### [Technical Field]

The present disclosure relates to an all-solid-state battery.

### [Background Art]

Currently, all-solid-state batteries are attracting attention. The all-solid-state batteries include a power generating element that contains substantially no liquid components. The power generating element is housed in an exterior body. Conventionally, proposals regarding exterior bodies of all-solid-state batteries have been made.

Claim 1 of Patent Literature 1 (Japanese Laid-Open Patent Publication No. 2018-133175) describes "A method for producing a laminated all-solid-state battery, comprising: housing, in an exterior body made of a laminated film, an all-solid-state battery laminate having one or more all-solid-state battery elements, each of the all-solid-state battery elements being obtained by stacking a negative electrode current collector layer having a negative electrode current collector tab, a negative electrode active material layer, a solid electrolyte layer, a positive electrode active material layer, and a positive electrode current collector layer having a positive electrode current collector tab in this order; pressing the all-solid-state battery laminate housed in the exterior body in a stacking direction from an outside of the exterior body; injecting a filler into the exterior body while pressing the all-solid-state battery laminate; and sealing the exterior body".

### [Citation List]

### [Patent Literature]

PTL 1: Japanese Laid-Open Patent Publication No. 2018-133175

### [Summary of Invention]

### [Technical Problem]

The exterior body made of a laminated film is required to have conditions such as processability, insulating properties, and thermal resistance. However, laminated films that sufficiently meet all these conditions are difficult to obtain or are expensive. Furthermore, when the inside of the exterior body is depressurized, short circuit is likely to occur between the power generating element and a metal layer of the laminated film, which results in a decrease in reliability of the battery. In such circumstances, one of the objects of the present disclosure is to provide an all-solid-state battery that is highly reliable and that is advantageous from a production perspective.

### [Solution to Problem]

An aspect of the present disclosure relates to an all-solid-state battery. The all-solid-state battery includes a laminate that includes at least one power generating element, an insulating film that is disposed to surround the laminate, and an exterior body inside which the laminate and the insulating film are housed, wherein the exterior body is formed using a metal laminated film, and an inside of the exterior body is depressurized.

### [Advantageous Effects of Invention]

With the present disclosure, an all-solid-state battery that is highly reliable and that is advantageous from a production perspective is obtained.

While novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

FIG. 1A is a schematic top view illustrating an example of an all-solid-state battery of Embodiment 1.
FIG. 1B is a cross-sectional view taken along line IB-IB in FIG. 1A.
FIG. 2 is a schematic developed view illustrating an example of an insulating film.
FIG. 3 is a schematic developed view illustrating another example of an insulating film.
FIG. 4 is a schematic diagram illustrating examples of an exterior body before being sealed and a laminate.
FIG. 5 is a schematic perspective view illustrating an example of the laminate.

### [Description of Embodiments]

Although embodiments according to the present disclosure will be described below using examples, the present disclosure is not limited to the examples described below. Although specific numerical values and materials may be mentioned as examples in the following description, other numerical values and other materials may be used as long as the invention according to the present disclosure can be implemented. The wording "numerical value A to numerical value B" as used herein encompasses the numerical value A and the numerical value B and can be read as "numerical value A or more and numerical value B or less". In the following description, when lower limits and upper limits of numerical values regarding specific physical properties, conditions, or the like are given as examples, any of the above-mentioned lower limits and any of the above-mentioned upper limits can be combined, as long as the lower limit is not greater than or equal to the upper limit.

### (All-Solid-State Battery)

An all-solid-state battery according to this embodiment may be referred to as an "all-solid-state battery (B)" or "battery (B)" hereinafter. The all-solid-state battery (B) includes a laminate that includes at least one power generating element, an insulating film that is disposed to surround the laminate, and an exterior body inside which the laminate and the insulating film are housed. The laminate may be referred to as a "laminate (S)" hereinafter. The insulating film may be referred to as an "insulating film (F)" hereinafter. The exterior body is formed using a metal laminated film. The inside of the exterior body is depressurized.

In the laminate (S), a plurality of layers included in the laminate (S) are stacked in a stacking direction SD. It is possible to improve the properties of the all-solid-state battery (B) by pressing the laminate (S) that includes the power generating element, in the stacking direction SD. Depressurizing the inside of the exterior body makes it possible to press the laminate (S) in the stacking direction SD by the atmospheric pressure. Furthermore, sealing the exterior body in a state in which the inside of the exterior body is depressurized makes it possible to reduce volatile components such as moisture present inside the exterior body.

The exterior body is required to have processability that allows the exterior body to be processed into a shape capable of housing the laminate. Also, the exterior body is formed using a metal laminated film, and is thus required to have high insulating properties if the insulating film (F) is not used. Furthermore, in the case of an all-solid-state battery without the insulating film (F), if the exterior body melts, short circuit will occur, and therefore, the exterior body is required to have high thermal resistance if the insulating film (F) is not used. Metal laminated films that meet all these requirements are difficult to obtain or are very expensive. Also, if meeting the requirements other than the processability is regarded as being important, the processability may deteriorate, thus making it difficult to produce a battery.

Since the insulating film (F) is used in the all-solid-state battery (B), the exterior body need not have high insulating properties. Furthermore, using the insulating film (F) having high thermal resistance makes it possible to use an exterior body whose thermal resistance is not so high. Accordingly, it is possible to ease the conditions required for the metal laminated film used in the exterior body. As a result, it is possible to produce an all-solid-state battery with high reliability at low cost and/or with high productivity. There is no particular limitation on the operating temperature of the all-solid-state battery (B). The all-solid-state battery (B) may be used under an atmosphere at a high temperature of 100°C or higher.

The pressure inside the exterior body is preferably 1.0×10² Pa or less, and particularly preferably 1.0×10⁻¹ Pa or less. A high degree of effectiveness is obtained by setting the pressure inside the exterior body to 1.0×10⁻¹ Pa or less.

It is preferable that the insulating film (F) is not sealed. For example, it is preferable that the insulating film (F) includes a communicating portion through which the inside and the outside of a space surrounded by the insulating film (F) are in communication with each other. Examples of the communicating portion include a gap, a through hole, and the like. The inside of the insulating film (F) can be depressurized due to the insulating film (F) being not sealed. As a result, it is possible to sufficiently press the laminate (S).

The laminate (S) may have a rectangular parallelepiped shape having six surfaces. In this case, it is preferable that at least a portion of the insulating film (F) is disposed between the exterior body (metal laminated film) and each of the six surfaces of the laminate (S). With this configuration, it is possible to protect all the surfaces of the laminate (S). The insulating film (F) may have a plurality of faces P that respectively face the six surfaces above. The plurality of faces P may directly face the six surfaces of the laminate (S). In other words, the plurality of faces P may be in contact with the six surfaces of the laminate (S). Alternatively, at least a portion of the plurality of faces P may face the surfaces of the laminate (S) with another member (e.g., an insulating film) being sandwiched therebetween. Each of the plurality of faces P is disposed substantially in parallel with the surface (surface of the laminate (S)) that it faces. The insulating film (F) may be disposed to cover most of the six surfaces of the rectangular parallelepiped laminate (S). For example, the insulating film (F) may be disposed to cover 90% (area ratio) or more of the six surfaces, or may be disposed to cover the entire six surfaces. The insulating film (F) is folded into a box shape, and thus can cover the six surfaces. Examples of a form in which the insulating film (F) covers the surfaces of the laminate (S) include a first form and a second form below. In the first form, the insulating film (F) covers the surfaces of the laminate (S) in a state in which the insulating film (F) is in contact with the surfaces of the laminate (S). In the second form, the insulating film (F) covers the surfaces of the laminate (S) in a state in which another member is disposed between the insulating film (F) and the surfaces of the laminate (S). That is to say, the all-solid-state battery (B) may include another member (e.g., an insulating member other than the insulating film (F)) disposed between the laminate (S) and the insulating film (F).

A portion of the insulating film (F) may be disposed between the exterior body and all of the twelve sides of the rectangular parallelepiped laminate (S). That is to say, the insulating film (F) may be disposed to cover all of the twelve sides of the rectangular parallelepiped laminate (S), or may be in contact with all of the twelve sides. The insulating film (F) may be disposed to cover 90% (length ratio) or more of the twelve sides of the rectangular parallelepiped laminate (S), or may be disposed to cover the entire twelve sides. With this configuration, it is possible to particularly suppress short circuit at a corner of the laminate (S). At least a portion of the insulating film (F) may be disposed between the exterior body and all of the six surfaces and the twelve sides of the rectangular parallelepiped laminate (S).

The insulating film (F) may be constituted by a single film and be folded to surround the laminate (S). Alternatively, the insulating film (F) may be constituted by a plurality of films. For example, the insulating film (F) may include a film for covering one principal surface of the laminate (S), and a film for covering the other principal surface thereof.

The laminate (S) may have a shape other than the rectangular parallelepiped shape. For example, the laminate (S) may have a plate or columnar shape having a circular or polygonal shape in a plan view. In this case, the insulating film (F) and the exterior body have shapes corresponding to the shape of the laminate (S). In any of these cases, it is preferable that the insulating film (F) is disposed to cover the two principal surfaces of the laminate (S). That is to say, it is preferable that at least a portion of the insulating film (F) is disposed between the exterior body and the two principal surfaces of the laminate (S). The insulating film (F) may have a plurality of faces P that face the two principal surfaces of the laminate (S). The plurality of faces P may directly face the two principal surfaces of the laminate (S). In other words, the plurality of faces P may be in contact with the two principal surfaces of the laminate (S). Alternatively, at least a portion of the plurality of faces P may face the surfaces of the laminate (S) with another member (e.g., an insulating film) being sandwiched therebetween. Each of the plurality of faces P is disposed substantially in parallel with the surface (principal surface of the laminate (S)) that it faces. Irrespective of the shape of the laminate (S), the insulating film (F) may have an unsealed bag-like shape.

The laminate (S) may have two principal surfaces and a side surface that connects the two principal surfaces. In this case, it is preferable that at least a portion of the insulating film (F) is disposed between the exterior body and the two principal surfaces and the side surface of the laminate (S). The insulating film (F) may have a plurality of faces P that respectively face the two principal surfaces and the side surface. The plurality of faces P may directly face the two principal surfaces and the side surface of the laminate (S). In other words, the plurality of faces P may be in contact with the two principal surfaces and the side surface of the laminate (S). Alternatively, at least a portion of the plurality of faces P may face the surfaces of the laminate (S) with another member (e.g., an insulating film) being sandwiched therebetween. Each of the plurality of faces P is disposed substantially in parallel with the surface (surface of the laminate (S)) that it faces. Examples of the shape of the laminate (S) having two principal surfaces and a side surface that connects the two principal surfaces include a plate or columnar shape having a circular or polygonal shape in a plan view, and a rectangular parallelepiped shape.

The laminate (S) may include a positive electrode current collector having a positive electrode tab, and a negative electrode current collector having a negative electrode tab. The positive electrode tab may be connected to a positive electrode lead at a first connection portion. The negative electrode tab may be connected to a negative electrode lead at a second connection portion. The insulating film (F) may cover the first connection portion and the second connection portion. The tab and the lead are connected to each other through welding or the like. Accordingly, minute projections and depressions are likely to be generated on the connection portion, and as a result, short circuit may be likely to occur at the connection portion. It is possible to particularly suppress short circuit at the connection portion by covering the connection portion with the insulating film (F).

The insulating film (F) may include a layer containing at least one type of resin selected from the group consisting of fluororesins and polyimide resins, or may be made of the at least one type of resin. The insulating film (F) may be a film made of a fluororesin or a film made of a polyimide resin, or may include both of the resins. These resins are preferable in terms of high insulating properties and high thermal resistance. Since the fluororesin is smooth, it is easy to house the insulating film (F) surrounding the laminate (S) in the exterior body. Accordingly, a fluororesin layer may be present on at least the exterior surface of the insulating film (F). The insulating film (F) may be a film made of a fluororesin. Examples of the fluororesin include polytetrafluoroethylene (PTFE), a perfluoroalkoxy alkane (PFA), an ethylene-tetrafluoroethylene copolymer (ETFE), and the like.

The insulating film (F) may be constituted by one type of resin or a plurality of types of resins. The insulating film (F) may be a single-layer film or a multilayer film.

The insulating film (F) may include an insulating inorganic filler or the like in order to improve the thermal resistance and the insulating properties, or may not include it. There is no particular limitation on the inorganic filler, and known inorganic fillers used in insulating films, sealing resins, and the like may be used. For example, aluminum oxide particles, silicon oxide particles, or the like may be used as the inorganic filler.

The upper temperature limit of the insulating film (F) may be higher than the upper temperature limit of the metal laminated film. With this configuration, the thermal resistance of the metal laminated film need not be improved so much, and thus the selection of the metal laminated film expands.

The insulating film (F) may include a resin layer made of a resin having a melting point higher than the melting points of all the resins included in the resin layers in the metal laminated film. With this configuration, the thermal resistance of the metal laminated film need not be improved so much, and thus the selection of the metal laminated film expands. The insulating film (F) may include a resin layer made of a resin having a melting point of 200°C or higher. Examples of the resin having a melting point of 200°C or higher include polytetrafluoroethylene (PTFE), a perfluoroalkoxy alkane (PFA), an ethylene-tetrafluoroethylene copolymer (ETFE), a polyimide, and the like.

The exterior body may include a first exterior member, and a second exterior member bonded to the first exterior member. At least one of the exterior members may have a recessed portion for housing at least a portion of the laminate (S). More specifically, the recessed portion houses at least a portion of the laminate (S) and at least a portion of the insulating film (F) surrounding the laminate (S) (the same applies to a recessed portion described below). The exterior body may include a first exterior member having a recessed portion for housing at least a portion of the laminate (S), and a second exterior member bonded to the first exterior member. The recessed portion has such a size that allows at least a portion of the laminate (S) to be housed therein. When the laminate (S) has a rectangular parallelepiped shape, the recessed portion is a rectangular parallelepiped recessed portion. For example, the exterior body may include a first exterior member having a rectangular parallelepiped recessed portion, and a second exterior member bonded to the first exterior member.

The second exterior member may be flat. Alternatively, the second exterior member may have a recessed portion for housing a portion of the laminate (S). When the metal laminated film is shaped to have a recessed portion, an insulating resin layer becomes thin at a corner of the recessed portion, and thus short circuit is likely to occur. Using the insulating film (F) makes it possible to suppress short circuit. Note that the first exterior member and the second exterior member may be connected to each other. For example, each of the first exterior member and the second exterior member may be formed by folding a single sheet.

Examples of constituent elements of the all-solid-state battery (B) will be described below. However, the following constituent elements are merely illustrative, and other constituent elements may be used. Note that an example of an all-solid-state lithium-ion battery is mainly described below.

The all-solid-state battery (B) is a battery containing no electrolyte solution. The all-solid-state battery (B) includes the laminate (S). The laminate (S) includes at least one power generating element. The laminate (S) may include a plurality of power generating elements that are stacked. There is no particular limitation on the power generating element, and power generating elements used in known all-solid-state batteries may be used. An example of the power generating element includes a positive electrode layer, a negative electrode layer, and a solid electrolyte layer disposed between the positive electrode layer and the negative electrode layer. The power generating element may include only the positive electrode layer, the negative electrode layer, and the solid electrolyte layer, or may include another layer in addition thereto. Examples of the other layer as described above include a thin conductive layer made of a material containing conductive powder, and the like. Examples of these layers will be described below.

### (Positive Electrode Layer)

The positive electrode layer contains a positive electrode active material, and may also contain another component as necessary. Examples of the other component include components used in positive electrodes of known all-solid-state batteries. The positive electrode layer may contain a solid electrolyte together with the positive electrode active material from the viewpoint of improving the lithium ion conductivity of the positive electrode layer. A solid electrolyte with lithium ion conductivity can be used as the solid electrolyte, and solid electrolytes used in solid electrolyte layers of known all-solid-state batteries may be used. Typically, the positive electrode active material is used in the form of particles (powder). The positive electrode layer can be formed by compressing positive electrode active material powder or a positive electrode mixture (containing positive electrode active material powder, an additive, and the like).

As the positive electrode active material, a material that can be used as a positive electrode active material in an all-solid-state battery can be used. In the case of an all-solid-state lithium-ion battery, examples of the positive electrode active material include lithium-containing composite oxides, and compounds other than oxides. Examples of the lithium-containing composite oxides include lithium cobalt oxide, lithium nickel oxide, lithium manganese oxide, and other lithium-containing composite oxides (e.g., LiNi_{0.8}Co_{0.15}Al_{0.05}O₂, and the like). Examples of the compounds other than the oxides include olivine-based compounds (LiMPO₄), sulfur-containing compounds (e.g., Li₂S and the like), and the like. Note that in the formula above, M represents a transition metal. One of the positive electrode active materials may be used alone, or two or more of the positive electrode active materials may be used in combination.

### (Negative Electrode Layer)

The negative electrode layer contains a negative electrode active material, and may also contain another component as necessary. Examples of the other component include components used in negative electrodes of known all-solid-state batteries. The negative electrode layer may contain a negative electrode active material, and a solid electrolyte with lithium ion conductivity. Typically, the negative electrode active material is used in the form of particles (powder). The negative electrode layer can be formed by compressing negative electrode active material powder or a negative electrode mixture (containing negative electrode active material powder, an additive, and the like).

As the negative electrode active material, a material that can be used as a negative electrode active material in an all-solid-state battery can be used. In the case of an all-solid lithium ion battery, a predetermined material (e.g., a carbonaceous material, a simple substance or alloy of a metal or semi-metal, a compound, or the like) capable of reversibly occluding and releasing lithium ions can be used as the negative electrode active material. Examples of the carbonaceous material include graphite (natural graphite, synthetic graphite, and the like), hard carbon, amorphous carbon, and the like. Examples of the simple substance or alloy of a metal or semi-metal include lithium metal, lithium alloys, a simple substance of Si, and the like. Examples of the compounds include oxides (titanium oxides, silicon oxides, and the like), sulfides, nitrides, hydrates, silicide (lithium silicide and the like), and the like. One of the negative electrode active materials may be used alone, or two or more of the negative electrode active materials may be used in combination. For example, a silicon oxide and a carbonaceous material may be used together. As the negative electrode active material, particles that contain graphite particles and amorphous carbon covering the graphite particles may be used.

### (Solid Electrolyte Layer)

The solid electrolyte layer disposed between the positive electrode and the negative electrode contains a solid electrolyte that conducts charge carriers. Typically, the solid electrolyte is used in the form of particles (powder). The solid electrolyte layer can be formed by compressing a material containing solid electrolyte powder.

As the solid electrolyte, a material that can be used as a solid electrolyte in an all-solid-state battery can be used. In the case of an all-solid-state lithium-ion battery, a material with lithium ion conductivity can be used as the solid electrolyte. Examples of such a solid electrolyte include inorganic solid electrolytes such as sulfides (sulfide-based solid electrolytes) and hydrides (hydride-based solid electrolytes).

Examples of the sulfides include Li₂S-SiS₂, Li₂S-P₂S₅, Li₂S-GeS₂, Li₂S-B₂S₃, Li₂S-Ga₂S₃, Li₂S-Al₂S₃, Li₂S-GeS₂-P₂S₅, Li₂S-Al₂S₃-P₂S₅, Li₂S-P₂S₃, Li₂S-P₂S₃-P₂S₅, LiX-Li₂S-P₂S₅, LiX-Li₂S-SiS₂, LiX-Li₂S-B₂S₃ (X: I, Br, or Cl), and the like. Examples of the hydrides include LiBH₄-LiI-based complex hydrides, LiBH₄-LiNH₂-based complex hydrides, and the like.

### (Positive Electrode Current Collector)

Typically, a metal layer (positive electrode current collector) is disposed on the outside of the positive electrode layer of the power generating element. A metal foil may be used for the metal layer (positive electrode current collector). Examples of the material of the positive electrode current collector (e.g., metal foil) include aluminum, magnesium, stainless steel, titanium, iron, cobalt, zinc, tin, alloys thereof, and the like. The positive electrode current collector may include a positive electrode tab protruding from the stacked portion of the laminate (S).

### (Negative Electrode Current Collector)

Typically, a metal layer (negative electrode current collector) is disposed on the outside of the negative electrode layer of the power generating element. A metal foil may be used for the metal layer (negative electrode current collector). Examples of the material of the metal layer (negative electrode current collector) include copper, nickel, stainless steel, titanium, alloys thereof, and the like. The negative electrode current collector may include a negative electrode tab protruding from the stacked portion of the laminate (S).

### (Positive Electrode Lead, Negative Electrode Lead)

The all-solid-state battery (B) may include leads (a positive electrode lead and a negative electrode lead). The positive electrode lead is connected to the positive electrode tab, and the negative electrode lead is connected to the negative electrode tab. There is no limitation on a method for connecting the lead to the tab (the positive electrode tab or the negative electrode tab), and the lead may be connected to the tab through welding or the like. The leads can be formed using a metal (e.g., copper, aluminum, stainless steel, titanium, or the like) having conductivity.

### (Insulating Film (F))

The above-described insulating film can be used as the insulating film (F). The thickness of the insulating film is not particularly limited, but is preferably within a range of 10 µm to 200 µm, and particularly preferably within a range of 50 µm to 100 µm.

### (Exterior Body)

As described above, the exterior body can be formed using a metal laminated film. An exterior body made of a metal laminated film can be used as the exterior body. The metal laminated film includes a metal layer sandwiched between two insulating resin layers. The metal layer increases airtightness inside the exterior body. The metal layer may be an aluminum layer (e.g., aluminum foil). Each of resin layers present on both sides of the metal layer may include a plurality of resin layers that are stacked. Since the all-solid-state battery (B) includes the insulating film (F), various metal laminated films can be used.

A heat-sealable resin layer (fusion layer) is disposed on one surface of the metal laminated film. The inside of the exterior body can be sealed by bringing the fusion layers into close contact with each other and heating them. Examples of the heat-sealable resin layer include layers made of polypropylene, acid-modified polypropylene, and the like. The thickness of the metal laminated film is not particularly limited, but is preferably within a range of 100 µm to 300 µm.

The all-solid-state battery (B) may include a case for housing the exterior body (the exterior body in which the laminate (S) and the insulating film (F) are housed). The case may be a metal case. The metal case may include a polygonal tube portion for housing the exterior body in which the laminate (S) and the insulating film (F) are sealed. The polygonal tube portion may include two plate-shaped portions that are each curved so as to protrude inward when the exterior body is not housed therein. The two plate-shaped portions can press the two principal surfaces of the laminate (S) inward.

### (Method for Producing All-Solid-State Battery (B))

The all-solid-state battery (B) can be produced using a production method that includes a step (i), a step (ii), and a step (iii). The items for describing the all-solid-state battery (B) can be applied to this production method, and therefore, redundant descriptions may be omitted. The step (i) is a step of forming the laminate (S). The step (ii) is a step of disposing the insulating film (F) around the laminate (S). The step (iii) is a step of housing the laminate (S) surrounded by the insulating film (F) in the exterior body and sealing the exterior body. Examples of these steps will be described below. Note that the all-solid-state battery (B) may be produced through steps other than the steps described below. The items regarding the production steps described below may be applied to the all-solid-state battery (B).

In the step (i), there is no particular limitation on the method for forming the laminate (S), and the laminate (S) may be formed using a known method for forming a laminate for an all-solid-state battery. In an example of the formation method, the laminate (S) is formed by stacking the materials of the layers and pressing them. In another example of the formation method, the layers are formed by pressing the materials of the layers. Then, the laminate (S) may be formed by stacking the formed layers and pressing them collectively. At the time of the pressing, the current collectors and the materials of the laminate (S) may be pressed together.

In the step (ii), for example, the laminate (S) can be surrounded by the insulating film (F) by disposing the laminate (S) on the insulating film (F) that have been cut into a predetermined shape in advance, and then folding the insulating film (F). Portions of the insulating film (F) to be folded may be made likely to be folded in advance through pressing or the like.

In the step (iii), the laminate (S) surrounded by the insulating film (F) is housed in the exterior body and then the exterior body is sealed. At this time, the exterior body is sealed in a state in which the inside of the exterior body is depressurized. Since the insulating film (F) is not sealed, the inside of the insulating film (F) is also depressurized. There is no limitation on a method for depressurizing the inside of the exterior body, and a known method may be used. For example, heat sealing may be conducted under a reduced-pressure atmosphere. Alternatively, the exterior body may be sealed using a known vacuum sealing device. As described above, an exterior body in which a recessed portion for housing at least a portion of the laminate is formed in advance may be used as the exterior body. Using such an exterior body makes it easy to conduct the step (iii), thus making it possible to improve the sealing reliability of the exterior body.

The leads (or the tabs) can be configured to protrude from the exterior body. Power can be exchanged between the power generating element of the all-solid-state battery (B) and an exterior device through the leads (or the tabs).

Hereinafter, an example of the embodiments according to the present disclosure will be specifically described with reference to the drawings. The descriptions of the embodiments above can be applied to the example of the embodiments described below, and modifications may be made based on the descriptions above. Out of the constituent elements of an all-solid-state battery described below, constituent elements that are not essential for the all-solid-state battery according to the present disclosure may be omitted. Also, items described below may be applied to the embodiments above. Note that the diagrams below are schematic diagrams, and are not to scale. In the diagrams below, some members may be omitted for ease of viewing.

### (Embodiment 1)

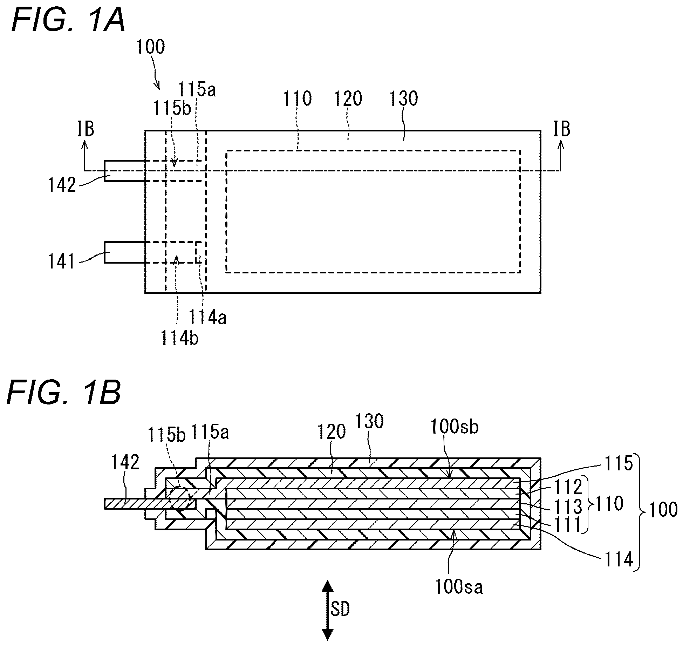

In Embodiment 1, an example of the all-solid-state battery (B) will be described. FIG. 1A shows a top view of an all-solid-state battery 10 of Embodiment 1. FIG. 1B is a cross-sectional view taken along line IB-IB in FIG. 1A.

Referring to FIGS. 1A and 1B, the all-solid-state battery 10 includes a laminate 100, an insulating film 120, an exterior body 130, a positive electrode lead 141, and a negative electrode lead 142. The laminate 100 is the laminate (S) described above. The insulating film 120 is the insulating film (F) described above. The exterior body 130 is the exterior body described above, and is made of a metal laminated film. The exterior body 130 is sealed, and the inside of the exterior body 130 is depressurized. In the example described in Embodiment 1, the laminate 100 is a rectangular parallelepiped laminate having six surfaces.

The laminate 100 includes a power generating element 110, a positive electrode current collector 114, and a negative electrode current collector 115. The power generating element 110 includes a positive electrode layer 111, a negative electrode layer 112, and a solid electrolyte layer 113. They are stacked in a stacking direction SD in the following arrangement: positive electrode current collector 114 / positive electrode layer 111 / solid electrolyte layer 113 / negative electrode layer 112 / negative electrode current collector 115. The laminate 100 has a first principal surface 100sa, and a second principal surface 100sb opposed to the first principal surface 100sa. In the example illustrated in Embodiment 1, the laminate 100 includes only one power generating element 110, but the laminate 100 may include a plurality of power generating elements 110 that are stacked. The power generating element 110 contains substantially no liquid component.

The positive electrode current collector 114 has a positive electrode tab 114a protruding from the stacked portion of the laminate 100. The negative electrode current collector 115 has a negative electrode tab 115a protruding from the stacked portion of the laminate 100. The positive electrode tab 114a is welded to the positive electrode lead 141 at a connection portion 114b. The negative electrode tab 115a is welded to the negative electrode lead 142 at a connection portion 115b.

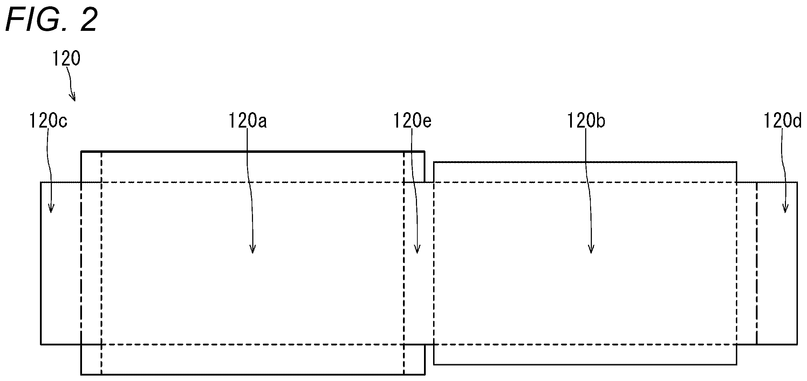

FIG. 2 illustrates a state in which an example of the insulating film 120 is developed. Folding portions indicated by a dotted line and a dot-and-dash line of the insulating film 120 shown in FIG. 2 makes it possible to surround the laminate 100 with the insulating film 120. Before the laminate 100 is surrounded, the portions indicated by a dotted line and a dot-and-dash line may be creased in advance. Portions of the insulating film 120 overlapping each other may be fixed using an adhesive, tape, or the like, or may not be fixed.

A portion of the insulating film 120 is disposed between the exterior body 130 and all of the six surfaces and the twelve sides of the laminate 100. The insulating film 120 has a face (region) 120a that faces (comes into contact with) the first principal surface 100sa, and a face (region) 120b that faces (comes into contact with) the second principal surface 100sb. Similarly, the insulating film 120 has faces (regions) that face (come into contact with) the four other surfaces of the laminate 100. The insulating film 120 has regions for covering the twelve sides of the laminate 100. For example, a face (region) 120e covers a side surface of the laminate 100. Furthermore, the insulating film 120 has a face (region) 120c for covering surfaces of the connection portions 114b and 115b on one side, and a face (region) 120d for covering surfaces of the connection portions 114b and 115b on the other side. The insulating film 120 is folded at the portions indicated by a dotted line such that the faces seen in FIG. 2, except the faces 120c and 120d, face the corresponding surfaces of the laminate 100. The insulating film 120 is folded at the portions indicated by a dot-and dash line such that the faces 120c and 120d face each other with the connection portions 114b and 115b being sandwiched therebetween. The insulating film 120 is folded such that the faces of the insulating film 120 are substantially in parallel with the surfaces of the laminate 100 that they face. As described above, another member may be disposed between the laminate 100 and the insulating film 120.

The insulating film 120 shown in FIG. 2 can cover all (or almost all) of the six surfaces and the twelve sides of the laminate 100. As a result, it is possible to particularly prevent short circuit from occurring between the exterior body 130 and burrs of the positive electrode current collector 114 and the negative electrode current collector 115, and the like. Furthermore, the insulating film 120 covers the connection portions 114b and 115b, thus making it possible to prevent short circuit from occurring between the exterior body 130 and burrs of the connection portions 114b and 115b, and the like.

The insulating film 120 is not sealed. That is to say, the insulating film 120 has a gap through which the inside and the outside of a space surrounded by the insulating film 120 are in communication with each other. Therefore, the space inside the insulating film 120 is also depressurized.

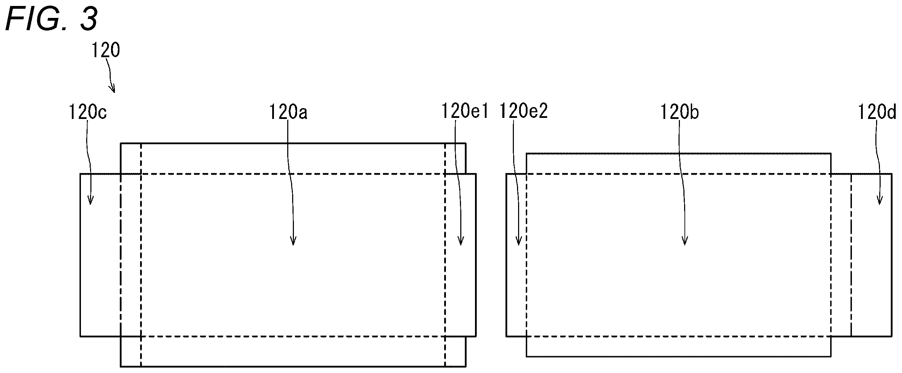

FIG. 2 illustrates an example in which the insulating film 120 is constituted by a single film. However, the insulating film 120 may be constituted by a plurality of films (e.g., two films). FIG. 3 illustrates an example in which the insulating film 120 is constituted by two films.

The insulating film 120 shown in FIG. 3 as an example has a shape formed by dividing the insulating film 120 shown in FIG. 2 at a portion of the face 120e connecting the faces 120a and 120b. Faces 121e1 and 121e2 correspond to the face 120e. However, in order to cover a side surface of the laminate 100, it is preferable that the total width of the faces 120e1 and 120e2 is larger than the width of the face 120e shown in FIG. 2.

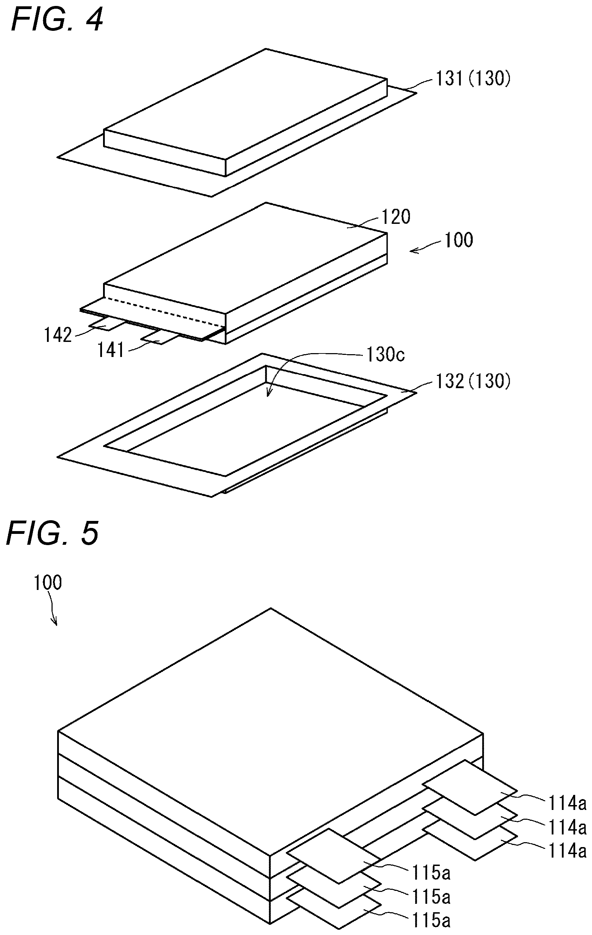

FIG. 4 schematically shows an example of the exterior body 130 before being sealed, and an example of the laminate 100 to be housed in the exterior body 130. The exterior body 130 is constituted by a first exterior member 131, and a second exterior member 132 bonded to the first exterior member 131. Each of the first exterior member 131 and the second exterior member 132 has a rectangular parallelepiped recessed portion 130c for housing at least a portion of the rectangular parallelepiped laminate 100. The recessed portion 130c is formed in advance before the step of housing the laminate 100 and the insulating film 120 is conducted. The exterior body 130 can be sealed by bonding portions around the recessed portions 130c through heat sealing or the like. Note that at least one of the first exterior member 131 and the second exterior member 132 need not have the recessed portion 130c.

In the example shown in FIGS. 1A and 1B, the laminate 100 includes a single power generating element. However, the laminate 100 may include a plurality of power generating elements. FIG. 5 shows a perspective view of an example of such a laminate 100.

The laminate 100 shown in FIG. 5 includes a plurality of power generating elements. A plurality of positive electrode tabs 114a and a plurality of negative electrode tabs 115a protrude from the laminate 100. The plurality of positive electrode tabs 114a are bent into an L-shape and stacked as necessary, and are collectively connected to the positive electrode lead 141. The plurality of negative electrode tabs 115a are bent into an L-shape and stacked as necessary, and are collectively connected to the negative electrode lead 142.

In the laminate 100 shown in FIG. 5, the plurality of power generating elements are connected in parallel. In this case, the plurality of power generating elements may be stacked with insulating layers being therebetween. Alternatively, the plurality of power generating elements may be stacked such that the same electrode layers (the positive electrode layers or the negative electrode layers) of the two adjacent power generating elements face each other with a current collector being sandwiched therebetween. Alternatively, unlike the example shown in FIG. 5, the plurality of power generating elements may be connected in series. In this case, a configuration can be employed in which only one positive electrode tab and only one negative electrode tab protrude from of the uppermost layer and the lowermost layer in the laminate 100. In this case, the lengths of the tabs may be increased to omit the positive electrode lead and the negative electrode lead.

### (Supplementary Notes)

The descriptions above disclose the following aspects.

### (Aspect 1)

An all-solid-state battery including:
a laminate that includes at least one power generating element;
an insulating film that is disposed to surround the laminate; and
an exterior body inside which the laminate and the insulating film are housed,
wherein the exterior body is formed using a metal laminated film, and
an inside of the exterior body is depressurized.

### (Aspect 2)

The all-solid-state battery according to aspect 1, wherein the insulating film is not sealed.

### (Aspect 3)

The all-solid-state battery according to aspect 1 or 2,
wherein the laminate has two principal surfaces, and a side surface that connects the two principal surfaces, and
at least a portion of the insulating film is disposed between the exterior body and the two principal surfaces and the side surface.

### (Aspect 4)

The all-solid-state battery according to aspect 1 or 2,
wherein the laminate has a rectangular parallelepiped shape having six surfaces, and
at least a portion of the insulating film is disposed between the exterior body and each of the six surfaces.

### (Aspect 5)

The all-solid-state battery according to any one of aspects 1 to 4,
wherein the laminate includes a positive electrode current collector with a positive electrode tab, and a negative electrode current collector with a negative electrode tab,
the positive electrode tab is connected to a positive electrode lead at a first connection portion,
the negative electrode tab is connected to a negative electrode lead at a second connection portion, and
the insulating film covers the first connection portion and the second connection portion.

### (Aspect 6)

The all-solid-state battery according to any one of aspects 1 to 5, wherein the insulating film includes a layer containing at least one type of resin selected from the group consisting of fluororesins and polyimide resins.

### (Aspect 7)

The all-solid-state battery according to any one of aspects 1 to 6, wherein an upper temperature limit of the insulating film is higher than an upper temperature limit of the metal laminated film.

### (Aspect 8)

The all-solid-state battery according to any one of aspects 1 to 7, wherein the exterior body includes a first exterior member having a recessed portion for housing at least a portion of the laminate, and a second exterior member bonded to the first exterior member.

### [Industrial Applicability]

The present disclosure can be applied to an all-solid-state battery.

Although the present invention has been described in terms of the presently preferred embodiments, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

10: All-solid-state battery, 100: Laminate, 110: Power generating element, 111: Positive electrode layer, 112: Negative electrode layer, 113: Solid electrolyte layer, 114: Positive electrode current collector, 114a: Positive electrode tab, 114b, 115b: Connection portion, 115: Negative electrode current collector, 115a: Negative electrode tab, 120: Insulating film, 130: Exterior body, 130c: Recessed portion, 131: First exterior member, 132: Second exterior member, 141: Positive electrode lead, 142: Negative electrode lead

## Claims

1. An all-solid-state battery comprising:
a laminate that includes at least one power generating element;
an insulating film that is disposed to surround the laminate; and
an exterior body inside which the laminate and the insulating film are housed,
wherein the exterior body is formed using a metal laminated film, and
an inside of the exterior body is depressurized.

2. The all-solid-state battery according to claim 1, wherein the insulating film is not sealed.

3. The all-solid-state battery according to claim 1 or 2,
wherein the laminate has two principal surfaces, and a side surface that connects the two principal surfaces, and
at least a portion of the insulating film is disposed between the exterior body and the two principal surfaces and the side surface.

4. The all-solid-state battery according to claim 1 or 2,
wherein the laminate has a rectangular parallelepiped shape having six surfaces, and
at least a portion of the insulating film is disposed between the exterior body and each of the six surfaces.

5. The all-solid-state battery according to claim 1 or 2,
wherein the laminate includes a positive electrode current collector with a positive electrode tab, and a negative electrode current collector with a negative electrode tab,
the positive electrode tab is connected to a positive electrode lead at a first connection portion,
the negative electrode tab is connected to a negative electrode lead at a second connection portion, and
the insulating film covers the first connection portion and the second connection portion.

6. The all-solid-state battery according to claim 1 or 2, wherein the insulating film includes a layer containing at least one type of resin selected from the group consisting of fluororesins and polyimide resins.

7. The all-solid-state battery according to claim 1 or 2, wherein an upper temperature limit of the insulating film is higher than an upper temperature limit of the metal laminated film.

8. The all-solid-state battery according to claim 1 or 2, wherein the exterior body includes a first exterior member having a recessed portion for housing at least a portion of the laminate, and a second exterior member bonded to the first exterior member.
